# EUROPÄISCHE PATENTSCHRIFT

(11) **EP 0 635 698 B1**
(45) Veröffentlichungstag und Bekanntmachung des Hinweises auf die Patenterteilung: **04.10.2001**
(21) Anmeldenummer: 94111164.3
(22) Anmeldetag: 18.07.1994
(51) Int. Cl.: G01C 11/00, H04B 7/195

(54) **Verfahren und Vorrichtung zur Verlängerung der Kommunikationsdauer von Raumflugkörpern**
Method and device for extending the communication time of space vehicles
Procédé et dispositif pour la prolongation de la durée de communication de véhicules spatiaux

(30) Priorität: 21.07.1993 DE 4324515
(43) Veröffentlichungstag der Anmeldung: 25.01.1995
(73) Patentinhaber: Erwin Kayser-Threde GmbH, D-81379 München (DE)
(72) Erfinder: Balteas, Nikolaos, Dr., D-81925 München (DE)
(74) Vertreter: Zangs, Rainer E., Dipl.-Ing.

(56) Entgegenhaltungen:
- US-A- 3 497 807
- ELECTRONICS & WIRELESS WORLD, Bd.95, Nr.1641, Juli 1989, SURREY GB Seiten 655 - 659, XP52360 J.CAVANAGH 'Remote sensing from space'
- PROCEEDINGS OF THE IEEE, Bd.72, Nr.11, November 1984, NEW YORK US Seiten 1627 - 1636 K.BRAYER 'Packet Switching for Mobile Earth Stations Via Low-Orbit Satellite Network'
- NTZ NACHRICHTENTECHNISCHE ZEITSCHRIFT, Bd.38, Nr.5, Mai 1985, BERLIN DE Seiten 346 - 348 J.GABEL 'Landkarten aus dem Orbit'

## Beschreibung

Die Erfindung betrifft ein Verfahren und eine Vorrichtung zur Verlängerung der Kommunikationsdauer von Raumflugkörpern, insbesondere von Raumflugkörpern mit hochauflösenden Sensoren, die Daten produzieren, welche nicht oder nur bedingt über längere Zeiträume in einem Speichermedium im Raumflugkörper abgespeichert werden können.

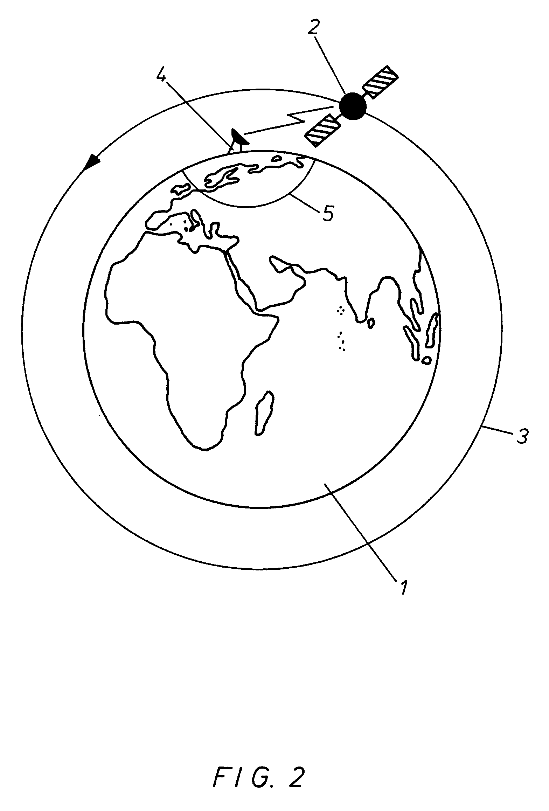

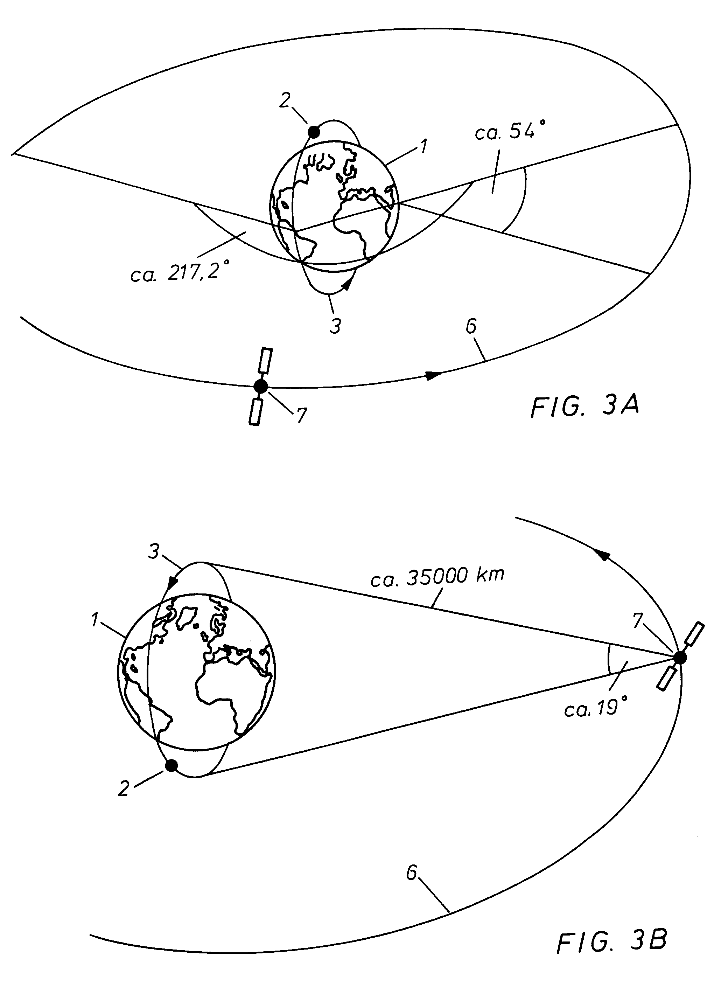

Zum besseren Verständnis der der Erfindung zugrundliegenden technischen Problematik und zur Erläuterung des Standes der Technik wird auf die Zeichnungen, Fig. 2 und Fig. 3A, 3B Bezug genommen.

Ein Raumflugkörper mit hochauflösenden Sensoren, wie z.B. Erderkundungssatelliten, umkreisen die Erde auf kreisförmigen erdnahen, auch polaren Umlaufbahnen (3), wobei pro Tag mehrere Erdumkreisungen durchgeführt werden. Während eines Überfluges der Erdkugel werden z.B. beim Erderkundungssatelliten Messungen durchgeführt, deren Daten nachfolgend an eine Bodenstation (4) übertragen werden.

Hierzu wird nach dem heutigen Stand der Technik so verfahren, daß der Erderkundungssatellit (2) beim Überflug über eine Bodenstation (4) auf der Erde (1) Meßdaten abstrahlt und diese von der Bodenstation (4) empfangen werden (siehe Fig. 2). Aufgrund der niedrigen Flughöhe des Satelliten (2) und seiner nicht geostationären Flugbahn (3) sind die abgestrahlten Meßdaten nur in einem sehr kleinen Empfangsbereich (5) und nur für wenige Minuten während eines Erdumlaufes zu empfangen. (Der Empfangsbereich (5) der Bodenstation (4) wird durch den sichtbaren Horizont (5° Elevationswinkel) definiert. Die Bodenstationsantenne wird zum Empfang nachgeführt. Die Satellitenantenne wird nicht nachgeführt. Die während einer Messung anfallenden sehr großen Datenmengen können nur bedingt in geeigneten Medien in dem Raumflugkörper (2) gespeichert werden. Zur Fortsetzung der Messungen müssen die Daten erst zur Bodenstation (4) weitergeleitet werden. Infolge der kurzen Kommunikationssdauer während eines Bahndurchlaufes ergibt sich ein sehr niedriger Nutzungsgrad des Raumflugkörpers. Eine effizientere Ausgestaltung des beschriebenen Verfahrens, durch weitere um den Erdball verteilte Bodenstationen, ist mit einem enorm hohem Kostenaufwand von derzeit ca. 120 Mio. DM pro Station verbunden und überdies in vielen Gebieten aus politisch/rechtlichen Gründen überhaupt nicht realisierbar.

Ein weiteres bekanntes Verfahren sieht vor, zur Verlängerung der Kommunikationsdauer von Raumflugkörpern einen oder mehrere Datenübertragungssatelliten auf einer geostationären Umlaufbahn zu verwenden, wobei dieser Satellit als Übermittlungsstation zwischen dem Raumflugkörper und der Bodenstation fungiert. Ein solches Verfahren ist schematisch in den Fig. 3A, 3B dargestellt.

Wie in Fig. 3A erkennbar, funkt der auf einer niedrigen und/oder auch polaren Umlaufbahn (3) befindliche Raumflugkörper (2) seine Meßdaten zu dem auf der geostationären Umlaufbahn (6) befindlichen Datenübertragungssatelliten (7), der wiederum die Meßdaten zur Bodenstation (4) (nicht dargestellt) überträgt. Aufgrund der unterschiedlichen Bahnlagen der Satelliten (2) und (7) zueinander resultiert zwischen ihnen eine mögliche diskontinuierliche tägliche Kommunikationsdauer von bis zu 18 Stunden. Für die Übertragung der von dem Raumflugkörper (2) gesammelten Daten zur Bodenstation (4) sind jedoch noch weitere Faktoren ausschlaggebend. Diese werden nachfolgend erläutert.

Wie in Fig. 3B veranschaulicht, befindet sich bei der oben beschriebenen Anordnung der Raumflugkörper (2) auf seiner polaren Umlaufbahn (3) mindestens 35.000 km von dem Datenübertragungssatelliten (7) auf seiner geostationären Umlaufbahn (6) entfernt. Der aus der Kreisbahn des Raumflugkörpers (2) und seiner Entfernung zum Datenübertragungssatelliten (7) gebildete Kegel hat einen Öffnungswinkel von etwa 19°. Mit Hilfe von Datenübertragungssatelliten gemäß dem vorher beschriebenen Verfahren kann deshalb eine kontinuierliche, tägliche Kommunikationsdauer von ca. 3 Stunden, 38 Minuten von einem Datenübertragungssatelliten zu einer Bodenstation realisiert werden.

Geostationäre Datenübertragungssatelliten verfügen aufgrund ihrer großen Distanz zur Erdoberfläche und zum Raumflugkörper (2) über den Nachteil, daß für die Kommunikation mit der Bodenstation (4) und zwischen den beiden Satelliten (2) und (7) selbst hohe Sendeleistungen und ein Nachführen der Sende- und Empfangsantennen von Datenübertragungssatellit (7), Raumflugkörper (2) und Bodenstation (4) über einen relativ großen Raumwinkel von bis zu 200° und mehr erforderlich sind. Hinzu kommt, daß bei den üblicherweise eingesetzten Richtfunkantennen (Antennen mit kleinem Öffnungswinkel) oder zur Laserkommunikation in der Regel täglich eine Neuakquisition zwischen den beiden Antennen durchgeführt werden muß, da keine kontinuierliche Sichtbarkeit aufgrund der Bahndynamik der verschiedenen Bahnen des Raumflugkörpers (2) und des Datenübertragungssatelliten (7) gewährleistet werden kann.

Ein weiterer Nachteil dieses Lösung ist die Gesamtsystemzuverlässigkeit und die erforderliche zeitliche Synchronisation von zwei notwendigen unterschiedlichen Missionen für den Raumflugkörper (2) und den Datenübertragungssatelliten (7) mit unterschiedlichen Trägerraketen und bei unterschiedlicher Lebensdauer der beiden Satelliten. Der Einsatz von geostationären Datenübertragungssatelliten ist mit extrem hohem Missionskosten von derzeit mehr als 1 Milliarde DM und sehr hohen Betriebskosten verbunden.

Aus der US-A-34 97 807 ist ein Mehrzwecksatellitensystem bekannt, bei dem sich eine Anzahl von Satelliten auf mehreren, voneinander verschiedenen Umlaufbahnen befindet. Die Satelliten sind auf ihren Umlaufbahnen so voneinander beabstandet, daß ein beliebiger Punkt auf der Erde sich in Sichtlinie zu mindestens einem der Satelliten und einer der Satelliten sich in Sichtlinie mit wenigstens einem anderen Satelliten im gleichen Orbit befindet. Darüber hinaus ist wenigstens einer der Satelliten in einer beliebigen der Umlaufbahnen in Sichtlinie mit mindestens einem der Satelliten auf einem benachbarten Orbit. Es ist bei diesem Satellitensystem also stets eine Vielzahl von Umlaufbahnen vorgesehen, so daß sich ein netz- oder maschenartiges Satellitensystem ergibt. Die Satelliten können beispielsweise für meteorologische Zwecke zur Erderkundung eingesetzt werden, womit dann jeder der auf den verschiedenen Umlaufbahnen befindlichen Satelliten mit einer Ausrüstung ausgestattet wird, die eine entsprechende Erderkundung erlaubt. Hierbei ist eine Datenübertragung zwischen den Satelliten über zwei oder mehrere Umlaufbahnen hinweg vorgesehen. Der Erfindung liegt das technische Problem zugrunde, ein Verfahren und eine Vorrichtung zu schaffen, die die Kommunikationsdauer von Raumflugkörpern, insbesondere von Raumflugkörpern mit hochauflösenden Sensoren, wie z.B. einem Erderkundungssatelliten, erheblich verlängert und unter Vermeidung der oben genannten Nachteile eine effektive Kommunikation oder Datenübertragung zwischen einer Bodenstation und dem Raumflugkörper ermöglicht, auch dann, wenn sich der Raumflugkörper über einer Erdregion befindet, in der keine Boden- bzw. Betriebsstation vorhanden ist.

Diese Aufgabe wird durch das erfindungsgemäße Verfahren und die erfindungsgemäße Vorrichtung gemäß der Merkmale des Ansprüchs 1 und 4 gelöst.

Zur Erläuterung der erfindungsgemäßen Vorteile wird angenommen, daß es sich bei dem Raumflugkörper um einen Erderkundungssatelliten handelt.

Mit dem erfindungsgemäßen Verfahren und der erfindungsgemäßen Vorrichtung zur Verlängerung der Betriebszeit von Raumflugkörpern ist es möglich, vom Erderkundungssatellit produzierte Daten auch in Echtzeit und ohne ein Ab- oder Zwischenspeichern der Daten auf Speichermedien im Raumflugkörper zu einer oder mehreren Boden- oder Empfangsstationen zu übermitteln. Dabei wird die Operationsfähigkeit des Erderkundungssatelliten auch auf Gebiete ausgedehnt, in denen keine Boden- oder Empfangsstationen vorhanden sind. Ferner ist es realisierbar, Daten von dem Erderkundungssatelliten zu empfangen und an diesen zu senden, ohne daß der Erderkundungssatellit im direkten Sicht- bzw. Funk- oder Empfangsbereich der Bodenstation liegt und ohne daß Satelliten auf anderen Umlaufbahnen, wie z.B. ein konventioneller geostationärer Übertragungssatellit, an der Kommunikation beteiligt sind.

Da der Erderkundungssatellit und die Hilfssatelliten die Erde auf der gleichen Umlaufbahn umkreisen und die gleiche Zielorientierung besitzen, muß auch bei der Verwendung von sehr scharf bündelnden Antennen nur ein sehr kleiner Bereich nachgeführt werden, wobei dieser Nachführbereich nur von der Zielorientierungsgenauigkeit der beteiligten Satelliten abhängt. Die Zielakquisition der beiden kommunizierenden Einheiten (Erderkundungssatellit und ein oder mehrere Hilfssatelliten) ist nur einmal pro Mission erforderlich.

Die Betriebszeiten von Erderkundungssatelliten mit Sensoren hohen Datenraten werden durch die auf der gleichen Umlaufbahn kreisenden Hilfssatelliten vervielfacht. Bei Verwendung eines einzigen Hilfssatelliten wird mit dem erfindungsgemäßen Verfahren die Betriebszeit des Erderkundungssatelliten verdoppelt. Bei einem ausgebauten Kommunikationsring kann auf diese Weise mit Hilfe von mehreren in äquidistanten Abständen auf der gleichen Umlaufbahn verteilten Hilfssatelliten eine kontinuierliche, 24-stündige Kommunikationsdauer jedes Raumflugkörpers auch auf niedrigen und polaren Umlaufbahnen bei einer weltweit einzigen Bodenstation realisiert werden. Dies bedeutet eine außergewöhnliche Verlängerung der bisher üblichen Kommunikationsbetriebszeiten.

Die Hilfssatelliten können baulich sehr leicht und klein ausgelegt werden und benötigen im Gegensatz zu Satelliten auf geostationären Umlaufbahnen nur geringste Treibstoffvorräte und Kommunikationseinrichtungen mit geringer Sendeleistung. Da sie zudem die gleiche Erdumlaufbahn wie der mit Sensoren ausgestattete Erderkundungssatellit selbst verwenden, ist es möglich, bei einer Mission gleichzeitig mehrere Hilfssatelliten als zusätzliche Nutzlast in einer Trägerrakete mitzuführen und zusammen mit dem Erderkundungssatelliten auf der Umlaufbahn auszusetzen. Die Kosten für einen derart in die Umlaufbahn geschossenen Hilfssatelliten belaufen sich nach heutigem Stand lediglich auf etwa 20 Mio. DM.

Ein Ausführungsbeispiel der Erfindung sowie weitere vorteilhafte Ausgestaltungen werden nachfolgend anhand der Zeichnungen erläutert.

Es zeigt:

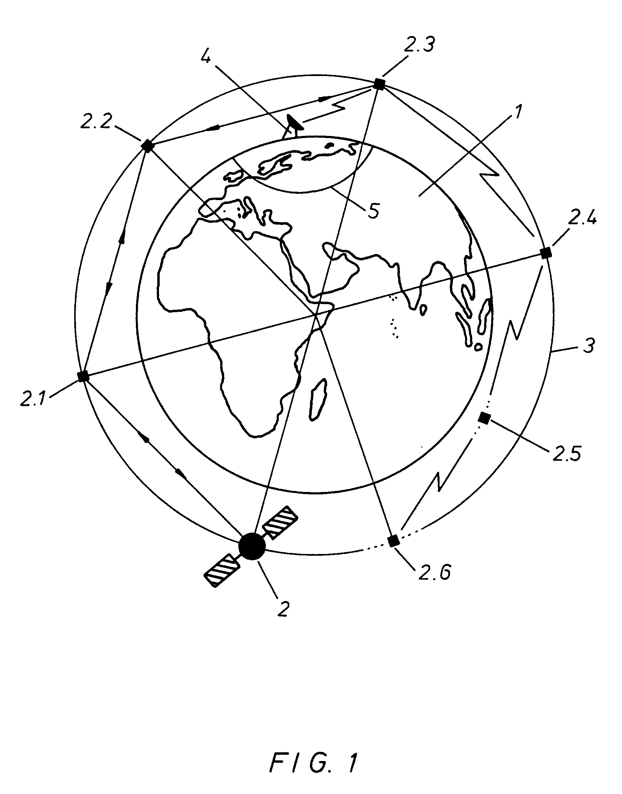

- Fig. 1: eine schematische Darstellung des erfindungsgemäßen Verfahrens und der erfindungsgemäßen Vorrichtung zur Verlängerung der Kommunikationsdauer von Raumflugkörpern.

Für die nachfolgende Beschreibung wird angenommen, daß es sich bei dem Raumflugkörper um einen mit Sensoren hoher Datenrate ausgerüsteten Erderkundungssatelliten (2) handelt.

Wie in Fig. 1 verdeutlicht, werden zum Zweck der Verlängerung der Kommunikationsdauer des Erderkundungssatelliten (2) ein oder mehrere Hilfssatelliten (2.1 bis 2.6) in die gleiche polare Erdumlaufbahn (3) des Erderkundungssatelliten (2) geschossen und die Hilfssatelliten (2.1 bis 2.6) auf der Umlaufbahn (3) verteilt. Die Positionierung der Satelliten (2, 2.1 bis 2.6) ist dabei so gewählt, daß ein Hilfssatellit (2.n) stets in direktem Sichtkontakt und damit in Nachrichtenverbindung mit mindestens einem Nachbarsatelliten steht und der Nachbarsatellit ein Hilfssatellit (2.n-1) oder (2.n+1) oder der Erderkundungssatellit (2) selbst ist.

Zur Realisierung einer 24-stündigen Kommunikationsdauer des Erderkundungssatelliten (2) werden mehrere Hilfssatelliten (2.1 bis 2.6) vorzugsweise zu einem Kommunikationsring zusammengefaßt und äquidistant auf der Umlaufbahn (3) verteilt. Die Hilfssatelliten (2.1 bis 2.6) stehen hierbei jeweils mit zwei benachbarten Satelliten in Sichtkontakt, wobei einer dieser Satelliten der Erderkundungssatellit (2) selbst sein kann. Die Hilfssatelliten (2.1 bis 2.6) können zudem so auf der Umlaufbahn (3) positioniert sein, daß sie dem Erderkundungssatelliten (2) vor- und/oder nacheilen.

Befindet sich der Erderkundungssatellit (2) nun auf einer Position auf der Erdumlaufbahn (3), von der aus eine direkte Kommunikation mit einer auf der Erdoberfläche befindlichen Bodenstation (4) nicht möglich ist, so sieht das erfindungsgemäße Verfahren vor, daß die Daten des Erderkundungssatelliten (2) zum nächsten in Sichtkontakt stehenden Hilfssatelliten (2.1) gefunkt werden und dieser die Daten wieder zum nächsten benachbarten Hilfssatelliten (2.3) und über diesen zu dem im Erfassungsbereich (5) der Bodenstation (4) liegenden Hilfssatelliten (2.3) weiterleitet, der dann die Daten der Bodenstation (4) übermittelt. Nimmt der Erderkundungssatellit (2) eine zur Bodenstation (4) günstige Umlaufbahnposition ein, werden die Daten direkt an die Bodenstation (4) gefunkt. Anderenfalls erfolgt die Datenübermittlung zur Bodenstation (4) stets über mindestens einen Hilfssatelliten. Auf diese Weise ist es der Bodenstation (4) möglich, die Daten des Erderkundungssatelliten (2) zu empfangen, ohne daß der Erderkundungssatellit (2) im direkten Empfangsbereich (5) der Bodenstation (4) liegt.

Die Aktivierung bzw. Deaktivierung der so gebildeten Kommunikationsverbindung zwischen dem Erderkundungssatelliten (2), ein oder mehreren Hilfssatelliten (2.1 bis 2.6) und der Bodenstation (4) sowie diese Objekte untereinander wird von der Bodenstation (4) aus gesteuert. Dabei erfolgt die Datenübertragung analog zu der oben beschriebenen Art und Weise in umgekehrter Richtung. Es ist hierbei vorgesehen, daß der Erderkundungssatellit (2) und die Hilfssatelliten (2.1 bis 2.6) sowohl einzeln als auch in Gruppen und/oder in Gesamtheit angesprochen werden. Somit ist es ebenfalls möglich, dem Erderkundungssatelliten (2) Steuersignale zu übermitteln, ohne daß sich dieser im direkten Empfangsbereich (5) der Bodenstation (4 aufhält.

Die Hilfssatelliten (2.1 bis 2.6) sind zweckmäßigerweise mit Kommunikationseinrichtung ausgerüstet, die eine Kommunikation mit dem Erderkundungssatelliten (2) und/oder der Bodenstation (4) und/oder zwischen den Hilfssatelliten (2.1 bis 2.6) untereinander ermöglicht. Ebenso ist der Erderkundungssatellit (2) mit einer Kommunikationseinrichtung versehen, die neben der reinen Datenübertragung eine Kommunikation mit den Hilfssatelliten (2.1 bis 2.6) und der Bodenstation (4) gestattet.

Dem Gedanken der Erfindung zufolge stellen der Erderkundungssatellit (2) und ein oder mehrere Hilfssatelliten (2.1 bis 2.6) eine einheitliche Mission dar und werden als Nutzlast mit der gleichen Trägerrakete in die Umlaufbahn (3) geschossen. Es ist natürlich ebenfalls möglich, die Hilfssatelliten (2.1 bis 2.6) unabhängig von der Mission des Erderkundungssatelliten (2) in dessen Erdumlaufbahn (3) zu schießen.

Bei der Verwendung einer geringen Anzahl von Hilfssatelliten, die nur eine diskontinuierliche, gegenüber konventionellen Systemen jedoch extrem verlängerte Kommunikationsdauer des Erderkundungssatelliten (2) zulassen, ist darüber hinaus auch die bisher übliche vorübergehende Speicherung der Meßdaten in einem Speichermedium im Erderkundungssatelliten (2) denkbar.

### Bezugszeichenliste

Es bezeichnen:
- 1: Erde
- 2: Erderkundungssatellit
- 2.1 bis 2.6: Hilfssatelliten
- 3: Umlaufbahn des Erderkundungssatelliten
- 4: Bodenstation
- 5: Empfangsbereich der Bodenstation
- 6: geostationäre Umlaufbahn
- 7: Datenübertragungssatellit

## Patentansprüche

1. Verfahren zur Verlängerung der Kommunikationsdauer eines Raumflugkörpers (2) mit hochauflösenden Sensoren, die Daten erzeugen, die nicht über längere Zeit im Raumflugkörper (2) selbst speicherbar sind, mit folgenden Schritten:
- Bereitstellen des Raumflugkörpers (2) und zumindest eines dem Raumflugkörper (2) vor- oder nacheilenden Hilfssatelliten (2.1 ... 2.6), der Kommunikationseinrichtungen, aber keine hochauflösenden Sensoren aufweist, die Daten erzeugen, die nicht über längere Zeit im Hilfssatelliten (2.1 ... 2.6) selbst speicherbar sind, auf einer einzigen gemeinsamen Umlaufbahn (3),
- Übertragen der von dem Raumflugkörper (2) ausgesendeten Daten an mindestens einen der Hilfssatelliten (2.1 ... 2.6),
- Weiterleiten der Datensignale ohne Zwischenspeicherung an die Bodenstation (4) durch den Hilfssatelliten (2.1 ... 2.6),
- Aktivieren der Kommunikationsverbindung zwischen dem Raumflugkörper (2) bzw. dem/den Hilfssatelliten (2.1 ... 2.6) und der Bodenstation (4) durch die Bodenstation (4), sobald sich der Raumflugkörper (2) bzw. ein Hilfssatellit (2.1 ... 2.6) im Empfangsbereich (5) der Bodenstation (4) befindet,
- so dass die von dem Raumflugkörper (2) ausgesendeten Signale im Verlauf eines Erdumlaufs an die Bodenstation (4) übertragen werden.

2. Verfahren zur Verlängerung der Kommunikationsdauer eines Raumflugkörpers gemäß Anspruch 1, **dadurch gekennzeichnet, daß** die Aktivierung bzw. Deaktivierung einer Kommunikationsverbindung zwischen Raumflugkörper (2), ein oder mehreren Hilfssatelliten (2.1 bis 2.6) und der Bodenstation (4) sowie dieser Objekte untereinander von der Bodenstation (4) aus gesteuert wird und dabei der Raumflugkörper (2) und ein oder mehrere Hilfssatelliten (2.1 bis 2.6) einzeln und/oder in Gruppen oder in Gesamtheit angesprochen werden.

3. Verfahren zur Verlängerung der Kommunikationsdauer eines Raumflugkörpers gemäß Anspruch 1 und 2, **dadurch gekennzeichnet, daß** der Raumflugkörper (2) und ein oder mehrere Hilfssatelliten (2.1 bis 2.6) eine einheitliche Mission darstellen und mit der gleichen Trägereinrichtung oder -rakete in eine Umlaufbahn (3) geschossen werden.

4. Satellitensystem zur Durchführung des Verfahrens nach Anspruch 1, mit:
- einem Raumflugkörper (2) mit hochauflösenden Sensoren, die Daten erzeugen, welche nicht über längere Zeit im Raumflugkörper (2) selbst speicherbar sind, und
- zumindest einem auf der gleichen, einzigen Umlaufbahn (3) des Raumflugkörpers verteilten Hilfssatelliten (2.1 ... 2.6), der Kommunikationseinrichtungen, aber keine hochauflösenden Sensoren aufweist, die Daten erzeugen, die nicht über längere Zeit im Hilfssatelliten (2.1 ... 2.6) selbst speicherbar sind, wobei ein Hilfssatellit (2.n) in direktem Kontakt mit mindestens einem Nachbarsatelliten steht, und der Nachbarsatellit ein Hilfssatellit (2.n-1 oder 2.n+1) oder der Raumflugkörper (2) selbst ist, und
- einer Bodenstation (4), die eine Einrichtung zum Aktivieren der Kommunikationsverbindung zwischen dem Raumflugkörper (2) bzw. dem Hilfssatelliten (2.1 ... 2.6) und der Bodenstation (4) aufweist, welche die Kommunikationsverbindung zwischen dem Raumflugkörper (2) bzw. dem/den Hilfssatelliten (2.1. ... 2.6) und der Bodenstation (4) aktiviert, sobald sich der Raumflugkörper (2) bzw. ein Hilfssatellit (2.1 ... 2.6) im Empfangsbereich (5) der Bodenstation (4) befindet.

5. Satellitensystem nach Anspruch 4, **dadurch gekennzeichnet, daß** die Hilfssatelliten (2.1 bis 2.6) äquidistant auf der Umlaufbahn verteilt sind.

6. Satellitensystem nach Anspruch 4 und 5, **dadurch gekennzeichnet, daß** die Hilfssatelliten (2.1 bis 2.6) über Kommunikationseinrichtung verfügen, die eine Kommunikation mit dem Raumflugkörper (2) und/oder einer Bodenstation und/oder zwischen den Hilfssatelliten (2.1 bis 2.6) untereinander ermöglicht.

7. Satellitensystem nach Anspruch 4 bis 6, **dadurch gekennzeichnet, daß** der Raumflugkörper (2) mit einer Kommunkationseinrichtung ausgestattet ist, die eine Kommunikation mit ein oder mehreren Hilfssatelliten (2.1 bis 2.6) und einer Bodenstationen (4) ermöglicht.

## Claims

1. Method for extending the communication time of a space missile (2) with high-resolution sensors which produce data which cannot be stored for a prolonged time in the space missile (2) itself, with the following steps:
- preparation of the space missile (2) and at least one auxiliary satellite (2.1 ... 2.6) which moves ahead of or lags behind the space missile (2) and which comprises communication devices but no high-resolution sensors which produce data which cannot be stored for a prolonged time in the auxiliary satellite (2.1 ... 2.6) itself, on a single common orbit (3),
- transmission of the data emitted by the space missile (2) to at least one of the auxiliary satellites (2.1 ... 2.6),
- forwarding of the data signals without temporary storage to the ground station (4) by the auxiliary satellite (2.1 ... 2.6),
- activation of the communication link between the space missile (2) or the auxiliary satellite(s) (2.1 ... 2.6) and the ground station (4) by the ground station (4) as soon as the space missile (2) or an auxiliary satellite (2.1 ... 2.6) is located within the reception range (5) of the ground station (4),
- so that the signals emitted by the space missile (2) are transmitted to the ground station (4) in the course of one revolution round the earth.

2. Method for extending the communication time of a space missile according to claim 1, **characterised in that** the activation or deactivation of a communication link between space missile (2), one or more auxiliary satellites (2.1 to 2.6) and the ground station (4) as well as these objects between each other is controlled from the ground station (4) and in the process the space missile (2) and one or more auxiliary satellites (2.1 to 2.6) are tripped individually and/or in groups or collectively.

3. Method for extending the communication time of a space missile according to claims 1 and 2, **characterised in that** the space missile (2) and one or more auxiliary satellites (2.1 to 2.6) constitute a common mission and are fired into orbit (3) with the same carrier device or rocket.

4. Satellite system for carrying out the method according to claim 1, with:
- a space missile (2) with high-resolution sensors which produce data which cannot be stored for a prolonged time in the space missile (2) itself; and
- at least one auxiliary satellite (2.1 ... 2.6) which is distributed on the same, single orbit (3) of the space missile and which comprises communication devices but no high-resolution sensors which produce data which cannot be stored for a prolonged time in the auxiliary satellite (2.1 ... 2.6) itself, wherein an auxiliary satellite (2.n) is in direct contact with at least one adjacent satellite, and the adjacent satellite is an auxiliary satellite (2.n or 2.n+1) or the space missile (2) itself, and
- a ground station (4) which comprises a device for activation of the communication link between the space missile (2) or the auxiliary satellite (2.1 ... 2.6) and the ground station (4) and which activates the communication link between the space missile (2) or the auxiliary satellite(s) (2.1 ... 2.6) and the ground station (4) as soon as the space missile (2) or an auxiliary satellite (2.1 ... 2.6) is located within the reception range (5) of the ground station (4).

5. Satellite system according to claim 4, **characterised in that** the auxiliary satellites (2.1 to 2.6) are distributed equidistantly on the orbit.

6. Satellite system according to claims 4 and 5, **characterised in that** the auxiliary satellites (2.1 to 2.6) have a communication device which allows communication with the space missile (2) and/or a ground station and/or between the auxiliary satellites (2.1 to 2.6).

7. Satellite system according to claims 4 to 6, **characterised in that** the space missile (2) is equipped with a communication device which allows communication with one or more auxiliary satellites (2.1 to 2.6) and a ground station (4).

## Revendications

1. Procédé pour la prolongation de la durée de communication d'un véhicule spatial (2), avec des capteurs à haute résolution générant des données, non stockables sur une longue durée dans le véhicule spatial (2) lui même, comportant les étapes suivantes :
- préparation du véhicule spatial (2) et d'au moins l'un des satellites auxiliaires (2.1...2.6) évoluant en anticipation ou à la traîne du véhicule spatial (2), présentant des dispositifs de communication mais aucun capteur à haute résolution, générant des données qui ne sont pas stockables sur une longue durée dans les satellites auxiliaires (2.1...2.6) eux-mêmes, sur une orbite d'évolution (3) commune unique,
- transmission des données envoyées par le véhicule spatial (2) à au moins l'un des satellites auxiliaires (2.1...2.6),
- retransmission des signaux de données, sans stockage intermédiaire, à la station au sol (4) au moyen des satellites auxiliaires (2.1...2.6),
- activation de la liaison de communication entre le véhicule spatial (2) ou le/les satellite(s) auxiliaire(s) (2.1...2.6) et la station au sol (4), par la station au sol (4), dès que le véhicule spatial (2) ou un satellite auxiliaire (2.1...2.6) se trouve dans la zone de réception (5) de la station au sol (4),
- de sorte que le signaux envoyés par le véhicule spatial (2) soient transmis au cours d'une révolution en orbite terrestre à la station au sol (4).

2. Procédé pour la prolongation de la durée de communication d'un véhicule spatial selon la revendication 1, **caractérisé en ce que** l'activation ou la désactivation d'une liaison de communication entre un véhicule spatial (2), un ou plusieurs satellite auxiliaire (2.1 à 2.6) et la station au sol (4), ainsi que de ces objets entre eux, est commandée depuis la station au sol (4) et le véhicule spatial (2) et un ou plusieurs satellites auxiliaires (2.1 à 2.6) étant amenés à réagir individuellement et/ou par groupes ou bien globalement.

3. Procédé pour la prolongation de la durée de communication d'un véhicule spatial selon les revendications 1 et 2, **caractérisé en ce que** le véhicule spatial (2) et un ou plusieurs satellites auxiliaires (2.1 à 2.6) constituent une mission unitaire et sont lancés pour être mis en orbite (3) avec le même dispositif vecteur ou fusée.

4. Système de satellites pour la mise en oeuvre du procédé selon la revendication 1, comportant :
- un véhicule spatial (2) muni de capteurs à haute résolution, générant des données non stockables sur une longue durée dans le véhicule spatial (2) lui-même ; et
- au moins un satellite auxiliaire (2.1 ... 2.6) réparti sur la même orbite (3) unique du véhicule spatial, présentant des dispositifs de communication mais aucun capteur à haute résolution, générant des données qui ne sont pas stockables sur une longue durée dans les satellites auxiliaires (2.1 ... 2.6) eux-mêmes, un satellite auxiliaire (2.n) étant en contact direct avec au moins un satellite voisin et le satellite voisin étant un satellite auxiliaire (2.n-1 ou 2.n+1), ou bien le véhicule spatial (2) lui-même, et
- une station au sol (4), qui présente un dispositif d'activation de la liaison de communication entre le véhicule spatial (2) ou le satellite auxiliaire (2.1 ... 2.6) et la station au sol (4), qui active la liaison de communication entre le véhicule spatial (2) et le ou les satellites auxiliaires (2.1 ... 2.6) et la station au sol (4), dès que le véhicule spatial (2) ou le satellite auxiliaire (2.1 ... 2.6) se trouve dans la zone de réception (5) de la station au sol (4).

5. Système de satellites selon la revendication 4, **caractérisé en ce que** les satellites auxiliaires (2.1 à 2.6) sont répartis de façon équidistante sur l'orbite.

6. Système de satellites selon les revendications 4 et 5, **caractérisé en ce que** les satellites auxiliaires (2.1 à 2.6) disposent d'un dispositif de communication qui permet une communication avec le véhicule spatial (2) et/ou une station au sol et/ou entre les satellites auxiliaires (2.1 à 2.6) entre eux.

7. Système de satellites selon les revendications 4 à 6, **caractérisé en ce que** le véhicule spatial (2) est équipé d'un dispositif de communication qui permet une communication avec un ou plusieurs satellite(s) auxiliaire(s) (2.1 à 2.6) et une station au sol (4).
